(19) Europäisches Patentamt
European Patent Office
Office européen des brevets

(11) EP 2 183 323 B1

(12) EUROPÄISCHE PATENTSCHRIFT

(45) Veröffentlichungstag und Bekanntmachung des Hinweises auf die Patenterteilung:
**19.11.2014 Patentblatt 2014/47**

(21) Anmeldenummer: **08784981.6**

(22) Anmeldetag: **23.07.2008**

(51) Int Cl.:
***C09D 4/00*** *(2006.01)* ***C08F 8/44*** *(2006.01)*

(86) Internationale Anmeldenummer:
**PCT/EP2008/006022**

(87) Internationale Veröffentlichungsnummer:
**WO 2009/024234 (26.02.2009 Gazette 2009/09)**

# (54) ANIONISCHE WASSERLÖSLICHE ADDITIVE AUF ALLYL- UND VINYLETHERBASIS

ANIONIC WATER-SOLUBLE ADDITIVES BASED ON ALLYL ETHER AND VINYL ETHER

ADDITIFS ANIONIQUES HYDROSOLUBLES À BASE D’ÉTHER DE VINYLE ET D’ALLYLE

(84) Benannte Vertragsstaaten:
**AT BE CH DE DK ES FI FR GB IT LI NL NO PL TR**

(30) Priorität: **23.08.2007 DE 102007039784**

(43) Veröffentlichungstag der Anmeldung:
**12.05.2010 Patentblatt 2010/19**

(73) Patentinhaber: **Clariant Finance (BVI) Limited**
**Road Town, Tortola (VG)**

(72) Erfinder:
- **FECHNER, Björn**
  **65817 Eppstein (DE)**
- **SCHAEFER, Carsten**
  **84453 Mühldorf am Inn (DE)**
- **WÖRNDLE, Alexander**
  **60313 Frankfurt am Main (DE)**

(74) Vertreter: **Jacobi, Carola**
**Clariant Produkte (Deutschland) GmbH**
**Patent Management**
**Industriepark Höchst, G 860**
**65926 Frankfurt am Main (DE)**

(56) Entgegenhaltungen:
**EP-A- 0 736 553**
**EP-A- 0 894 811**
**EP-A- 1 142 972**
**JP-A- 57 194 038**
**US-A1- 2003 209 695**

EP 2 183 323 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gegenstand der vorliegenden Erfindung sind neuartige anionische Copolymere, die als Dispergiermittel für wasserbasierende Pigmentpräparationen verwendet werden können, und ein Verfahren zur Herstellung dieser Copolymere.

Die bisher gebräuchlichen anionischen Dispergiermittel auf Novolak-Basis enthalten als Folge ihrer Herstellung Reste von Alkylphenolen, häufig Nonylphenol, und deren Ethoxylaten. Da Alkylphenolethoxylate bzw. deren Abbauprodukte in der Umwelt kaum abgebaut werden, reichem sie sich an. Dies ist problematisch, da sie auf Wasserorganismen eine hormonelle Wirkung zeigen. Daher wurden in vielen Ländern Rechtsvorschriften erfassen (z. B. 2003/53/EC), die den Einsatz von Stoffen, die Alkylphenole bzw. ihre Ethoxylate enthalten, in offenen Stoffkreisläufen beschränken bzw. verbieten.

Die US 2005 085 563 beschreibt Dispergiermittel, die durch Copolymerisation von vinyl-funktionalisierten Polyethern und Styroloxid gewonnen werden.
In EP-A-0 894 811 und EP-A-0 736 553 werden Copolymere auf Basis von ungesättigten Carbonsäurederivaten und Oxalkylenglykolalkylethern sowie einem Dicarbonsäurederivat aufgezeigt, die sich zur Verwendung in hydraulischen Bindemitteln, insbesondere Zement eignen.
In DE-A-10017 667 wird die Verwendung solcher Copolymere zur Herstellung wässriger Pigmentpräparationen beschrieben.

US 2003/209695 A1 offenbart Polymere, die Polyalkylenoxidgruppen sowie weitere Monomere mit anionischen und kationischen Gruppen enthalten und zur Dispergierung von anorganischen Substanzen verwendet werden.

JP 57 194038 A beschreibt wasserlösliche Polymere aus Polyalkylenglykolmonoallylethern und Acrylaten als Dispergiermittel für Calciumcarbonate. Bisherige Untersuchungen haben gezeigt, dass es nach wie vor außerordentlich schwierig ist, Dispergiermittel zu synthetisieren, die anionischen Novolaksystemen äquivalent sind. Gefordert sind demnach neue Dispergiermittel, die organische Pigmente in hoher Konzentration von über 40 % niederviskos dispergieren können. Die Dispersionen müssen leicht herstellbar sein, d.h. die Pigmente müssen leicht benetzbar und leicht ins wässrige Medium einarbeitbar sein. Die Dispersion muss eine hohe und reproduzierbare Farbstärke aufweisen und diese über einen Zeitraum von mehreren Jahren stabil halten. Ebenfalls sollten alle weiteren coloristischen Parameter wie z. B. der Bunttonwinkel und die Reinheit reproduzierbar und stabil sein. Weiterhin muss die Dispersion über eine niedrige Viskosität verfügen; die Pigmente dürfen weder agglomerieren noch flockulieren, noch dürfen sie aufschwimmen oder sedimentieren. Die Dispersion sollte nicht schäumen bzw. keine Schaumbildung im Anwendungsmedium verursachen oder beschleunigen. Ferner sollten die Dispergiermittel zu einer breiten Verträglichkeit der Dispersionen in verschiedenen Anwendungsmedien beitragen. Zudem muss die Dispersion scherstabil sein, d .h. es darf sich unter Scherung nicht die Farbstärke oder Coloristik ändern und die Dispersion muss unter diesen Bedingungen flockulationsstabil bleiben.

Überraschenderweise wurde gefunden, dass spezielle anionische Kammcopolymere, die mit Hilfe von Makromonomeren aus Polyethylen/ Polypropylenglykol-Monovinylethern oder -Allylethern hergestellt werden, diese Aufgabe erfüllen.

Gegenstand der Erfindung sind daher anionisch modifizierte Copolymere, erhältlich durch Polymerisation der Monomere (A), (B) und (C) unter Erhalt von nichtionischen Copolymeren, die reaktive terminale OH-Gruppen besitzen, und anschließende Umsetzung der terminalen OH-Gruppen im Monomer der Formel (I) zu anionischen Endgruppen, $SO_3M$, $CH_2COOM$, $PO_3M_2$ oder Sulfosuccinat, wobei M die Bedeutung H, einwertiges Metallkation, zweiwertiges Metallkation, $NH_4^+$, ein sekundäres, tertiares oder quartäres Ammoniunion, oder eine Kombination davon, wobei

(A) ein Monomer der Formel (I) ist

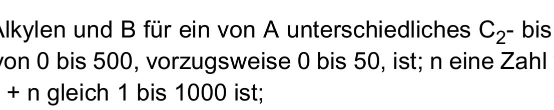

(I)

wobei A für $C_2$- bis $C_4$-Alkylen und B für ein von A unterschiedliches $C_2$- bis $C_4$-Alkylen steht, k der Zahl 0 oder 1 entspricht, m eine Zahl von 0 bis 500, vorzugsweise 0 bis 50, ist; n eine Zahl von 0 bis 500, vorzugsweise 0 bis 50, ist, wobei die Summe m + n gleich 1 bis 1000 ist;
(B) ein ethylenisch ungesättigtes Monomer ist, das eine aromatische Gruppe enthält; und
sich durch die Formel (IIa) oder (IIb) beschreibten:

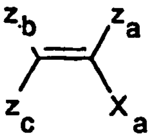

(IIa)

wobei

- $X_a$ für einen aromatischen oder araliphatischen Rest mit 3 bis 30 C-Atomen steht, der gegebenenfalls eines oder mehrere der Heteroatome N, O und S enthält,
- $Z_a$ für H oder $(C_1-C_4)$-Alkyl steht,
- $Z_b$ für H oder $(C_1-C_4)$-Alkyl steht,
- $Z_c$ für H oder $(C_1-C_4)$-Alkyl steht;

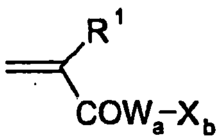

(IIb)

wobei

- $R^1$ für Wasserstoff oder Methyl steht,
- $X_b$ für einen aromatischen oder araliphatischen Rest mit 3 bis 30 C-Atomen steht, der gegebenenfalls eines oder mehrere der Heteroatome N, O und S enthält,
- $W_a$ für Sauerstoff oder die Gruppe NH steht;

und (C) ein ethylenisch ungesättigtes Monomer ist, das einen Alkylrest enthält, und sich durch die Formel (IIIa) oder Formel (IIIb) beschreibt:

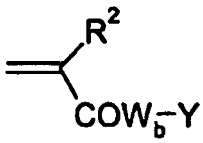

(IIIa)

wobei

- $R^2$ für Wasserstoff oder Methyl steht,
- Y für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
- $W_b$ für Sauerstoff oder die Gruppe NH steht:

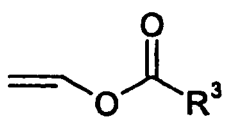

(IIIb)

wobei

- $R^3$ für einen aliphatischen Kohlenwasserstoffrest mit 1 bis 30 C-Atomen, vorzugsweise 6 bis 20, insbesondere 8 bis 12 C-Atomen, steht, der linear oder verzweigt, oder auch cyclisch sein kann, und die Heteroatome O, N und/oder S enthalten kann und auch ungesättigt sein kann.

Das erfindungsgemäße Copolymer besitzt übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.
Die anionischen Endgruppen können Sulfate, Sulfosuccinate, Carboxylate oder Phosphate sein.
Die reaktiven terminalen OH-Gruppen, die zu den anionischen Endgruppen umgesetzt werden, befinden sich in den Polymer-Seitenketten, die aus den Monomeren der Formel (I) entstehen.

Der molare Anteil der Monomere beträgt bevorzugt 1 bis 80 % für das Monomer (A), 0,1 bis 80 % für das Monomer (B), und 0,1 bis 80 % für das Monomer (C). Besonders bevorzugt liegt der molare Anteil der Monomere bei 10 bis 70 % für Monomer (A), bei 10 bis 60 % für Monomer (B) und bei 10 bis 60 % für Monomer (C).

Bevorzugte Monomere (A) sind solche, worin A Ethylen und B Propylen, oder A Propylen und B Ethylen bedeuten.
Die Alkylenoxideinheiten $(A\text{-}O)_m$ und $(B\text{-}O)_n$ können entweder statistisch oder wie im Falle einer bevorzugten Ausführungsform blockartig angeordnet vorliegen. Die Summe der Alkylenoxideinheiten kann prinzipiell n + m = 1 bis 1000 sein, bevorzugt ist 1 bis 500, insbesondere 2 bis 100, besonders bevorzugt 5 bis 100.

Zu den Monomeren (B) gehören beispielsweise die folgenden Ester und Amide der Acrylsäure und Methacrylsäure: Phenyl, Benzyl, Tolyl, 2-Phenoxyethyl, Phenethyl.
Weitere Monomere (B) sind vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol.
Besonders bevorzugte Monomere (B) können sein: Styrol, 1-Vinylimidazol, Benzylmethacrylat, 2-Phenoxyethylmethacrylat und Phenethylmethacrylat.

Zu den Monomeren (C) gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Octyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl.

Des Weiteren gehören zu den Monomeren (C) die Vinylester der Carbonsäuren, wie beispielsweise Laurinsäurevinylester, Myristinsäurevinylester, Stearinsäurevinylester, Behensäure-, Pivalinsäure-, Neohexansäure-, Neoheptansäure-, Neooctansäure-, Neononansäure-, Neodecansäure- und Neoundecansäurevinylester. Hierbei können ebenfalls die Vinylester aus Gemischen derartiger Carbonsäuren eingesetzt werden.

Die erfindungsgemäßen Copolymere besitzen ein Molekulargewicht von $10^3$ g/mol bis $10^9$ g/mol, besonders bevorzugt von $10^3$ bis $10^7$ g/mol, insbesondere bevorzugt $10^3$ bis $10^5$ g/mol.

Durch die Kombination der Monomere (A) mit den aromatischen und aliphatischen Monomeren (B) und (C) gelingt es, die Eigenschaften von novolakartigen Dispergiermitteln so nachzubilden, dass ein sehr ähnliches Eigenschaftsprofil erhalten wird.

Im Gegensatz zu den erfindungsgemäßen Polymeren sind Polymere mit Carboxylatgruppen am Polymerrückgrat nicht für die Herstellung von Pigmentdispersionen mit hohen Konzentrationen an organischen Pigmenten von über 40 % geeignet, da sie zu hohen Viskositäten führen.

Die Herstellung der erfindungsgemäßen Copolymere kann mittels radikalischer Polymerisation erfolgen. Die Polymerisationsreaktion kann kontinuierlich, diskontinuierlich oder semi-kontinuierlich durchgeführt werden.

Die Polymerisationsreaktion wird vorteilhafterweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykolmonoalkylether und -dialkylether verwendet werden. Ebenso können aromatische Lösungsmittel wie z. B. Toluol, Xylol oder höhersiedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen. Besonders bevorzugt sind Methylethylketon, Methylisobutylketon, Isopropanol.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck.
Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. $(NH_4)_2S_2O_8$, $K_2S_2O_8$ oder $H_2O_2$, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z. B. Tetrachlorkohlenstoff, Chloroform und Methylenchlorid.

Im Anschluss an die Polymerisation wird das Lösungsmittel entfernt. Das so erhaltene nichtionische Polymer besitzt nun an den Polyoxyalkylen-Seitenketten reaktive Hydroxy-Funktionen, die im folgenden Schritt zu anionischen Funktionalitäten umgesetzt werden. Anionische Funktionalitäten sind beispielsweise $SO_3M$, $CH_2COOM$, $PO_3M_2$ oder Sulfosuccinat. M hat dabei die nachstehend definierte Bedeutung.

Die erfindungsgemäßen anionischen Copolymere lassen sich beispielsweise durch die Formeln (IV), (V), (VI) oder (VII) beschreiben.

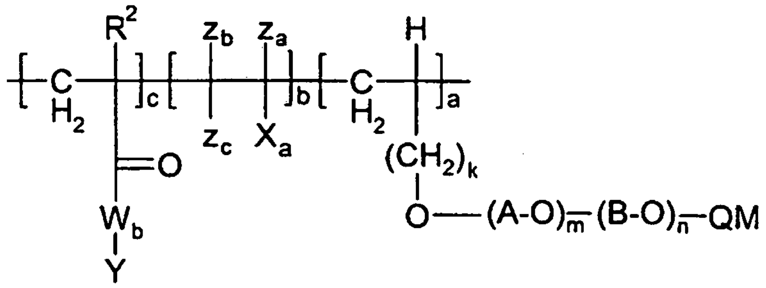

(IV)

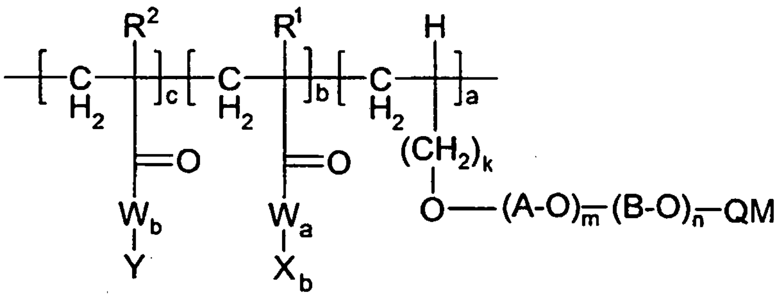

(V)

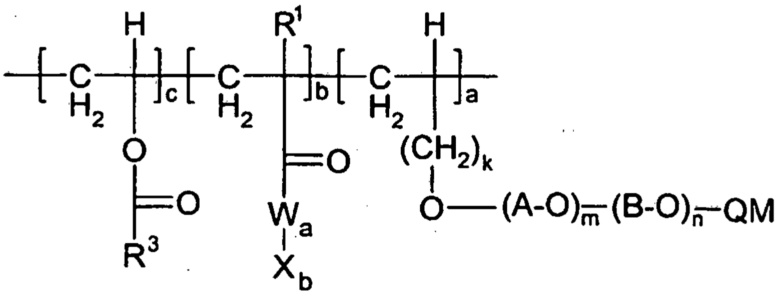

(VI)

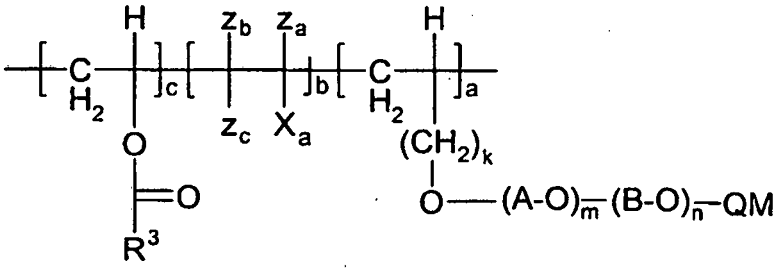

(VII)

Die Indices a, b und c geben den molaren Anteil des jeweiligen Monomeren (A), (B) und (C) an, und zwar:

a = 0,01 - 0.8
b = 0,001 - 0,8
c = 0,001 - 0,8

wobei die Summe aus a + b + c gleich 1 ist,
und besonders bevorzugt

a = 0,1 - 0,7
b = 0,1 - 0,6
c = 0,1 - 0,6
wobei die Summe aus a + b + c gleich 1 ist.

In Formel (IV), (V), (VI) und (VII) steht Q für
$SO_3$, $CH_2COO$, $PO_3M$,
oder QM bedeutet

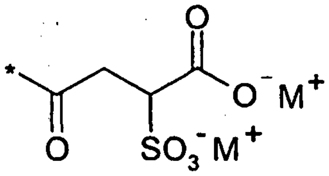

oder

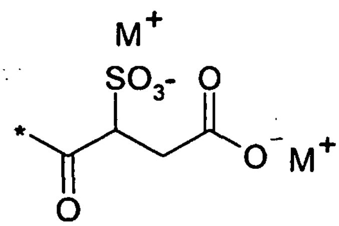

und M steht für H, ein einwertiges Metallkation, ein zweiwertiges Metallkation, $NH_4^+$, ein sekundäres, tertiäres oder quartäres Ammoniumion, oder eine Kombination davon, oder für Äquivalente von zwei-, drei- oder mehrwertigen Metallionen wie beispielsweise $Ca^{2+}$ oder $Al^{3+}$ (der Stern * gibt in der Markush-Formel an, dass an dieser Stelle eine

Verknüpfung zum Polymer besteht).

Im Fall der Sulfosuccinate werden die nichtionischen Copolymere beispielsweise zunächst mit Maleinsäureanhydrid verestert. Hierbei kann ohne Lösungsmittel gearbeitet werden, die Reaktion kann in der Polymerschmelze unter erhöhter Temperatur durchgeführt werden. Anschließend wird der erhaltene Maleinsäuremonoester sulfoniert. Hierzu wird dieser beispielsweise in einer wässrigen Lösung mit Natriumsulfit oder Natriumpyrosulfit umgesetzt. Als Produkt erhält man die wässrige Lösung des Sulfosuccinat-Natriumsalzes.

Die Sulfatester werden beispielsweise durch Umsetzung der nichtionischen Copolymere mit Amidosulfonsäure hergestellt. Diese Umsetzung erfolgt in einer Schmelze des nichtionischen Copolymers unter Zugabe von Amidosulfonsäure. Hierbei werden die OH-Gruppen des Copolymers in Sulfatester umgewandelt, die dann als Ammoniumsalz vorliegen.

Durch Carboxymethylierung, beispielsweise mit Natriumchloracetat, können die terminalen Hydroxyfunktionen in die entsprechenden Polyethercarboxylate überführt werden.

Die Phosphorsäureester können beispielsweise durch die Umsetzung einer Schmelze des nichtionischen Copolymers mit Polyphosphorsäure oder Phosphorpentoxid erhalten werden. Bei dieser Reaktion können sowohl Phosphorsäuremonoester als auch -diester und -triester erhalten werden.

Ein weiterer Gegenstand der vorliegenden Erfindung ist die Verwendung des erfindungsgemäßen anionischen Copolymers als Dispergiermittel insbesondere für Pigmente und Füllstoffe, z. B. für wasserbasierende Pigmentkonzentrate, die zum Einfärben von Dispersions- und Lackfarben, Anstrichmitteln, Beschichtungsstoffen und Druckfarben verwendet werden, sowie zum Einfärben von Papier, Kartonagen und Textilien.

Synthesebeispiele

Synthesevorschrift 1:

Allgemeine Polymerisationsvorschrift:

In einem Kolben mit Rührer, Rückflusskühler, Innenthermometer und Stickstoffeinleitung wurde das Monomer A, Monomer C und ggf. der Molekulargewichtsregler in Lösungsmittel unter Stickstoffeinleitung vorgelegt. Dann wurde die Temperatur unter Rühren auf 80 °C gebracht und innerhalb einer Stunde eine Lösung des Initiators zudosiert. Gleichzeitig wurde mit dem Dosieren von Monomer B begonnen, das nach 3 Stunden abgeschlossen wurde. Im Anschluss wurde noch für 2 Stunden bei dieser Temperatur weitergerührt, dann das Lösemittel im Vakuum entfernt.

Synthesevorschrift 2:

Allgemeine Polymerisationsvorschrift:

In einem Kolben mit Rührer, Rückflusskühler, Innenthermometer und Stickstoffeinleitung wurde das Monomer A, Monomer C und ggf. der Molekulargewichtsregler und Komponente 1 (Ascorbinsäure) des Redoxinitiatorsystems in Lösungsmittel unter Stickstoffeinleitung vorgelegt. Dann wurde die Temperatur unter Rühren auf 80 °C gebracht und innerhalb von drei Stunden eine Lösung der Komponente 2 (t-BuOOH) des Redoxinitiatorsystems zudosiert. Gleichzeitig wurde mit dem Dosieren von Monomer B begonnen, das nach 3 Stunden abgeschlossen wurde. Im Anschluss wurde noch für 2 Stunden bei dieser Temperatur weitergerührt, dann das Lösemittel im Vakuum entfernt.

Synthesevorschrift 3:

Allgemeine Synthesevorschrift zur Umsetzung der nach Synthesevorschrift 1 oder 2 erhaltenen Polymere zu anionischen Copolymeren mit Ethersulfat-Gruppen an den Seitenketten:

> Das Copolymer wurde unter Stickstoff in einem Kolben mit Amidosulfonsäure und Harnstoff vorgelegt. Dann wurde unter Rühren für 4 Stunden auf 100 °C erwärmt. Anschließend wurde mit 50 gew.-%iger Natronlauge der pH-Wert auf 6,5 bis 7,5 eingestellt. Über NMR-Spektroskopie konnte ein Umsetzungsgrad von > 95 % zum entsprechenden Schwefelsäureester-Ammoniumsalz ermittelt werden.

Synthesevorschrift 4:

Allgemeine Synthesevorschrift zur Umsetzung der nach Synthesevorschrift 1 oder 2 erhaltenen Polymere zu anionischen Copolymeren mit Sulfosuccinat-Gruppen an den Seitenketten:

Das Copolymer wurde unter Stickstoff in einem Kolben vorgelegt. Dann wurde Maleinsäureanhydrid und Natriumhydroxid zugegeben und unter Rühren auf eine Temperatur von 75 bis 85 °C aufgeheizt. Bei dieser Temperatur wurde drei Stunden lang gerührt und anschließend wässrige Natriumsulfitlösung (10 gew.-%ig) zudosiert. Bei 60 bis 70 °C wurde bis zur Vollendung der Reaktion gerührt und schließlich der pH-Wert mit 50 gew.-%iger Natronlauge auf pH 7 eingestellt.

Die folgenden drei Tabellen enthalten zweistufige Synthesebeispiele, bei denen das Polymer zunächst nach Synthesevorschrift 1 oder 2 und dann das anionische Derivat des Polymers nach Synthesevorschrift 3 oder 4 hergestellt wird.

AMBN = 2,2'-Azobis(2-methylbutyronitril)

| | Tabelle 1 | 1 | 2 | 3 | 4 | 5 | 6 | 7 | 8 | 9 | 10 |
|---|---|---|---|---|---|---|---|---|---|---|---|
| Monomer C | 2-Ethylhexylmethacrylat | 136,4 g | | | | | | | | | |
| | Laurylmethacrylat | | | 175,0 g | | | | | | | |
| | Stearylmethacrylat | | | | | 232,8 g | | | | | |
| | Isobornylmethacrylat | | | | | | | 152,9 g | | | |
| | Tetrahydrofurfurylmethacrylat | | | | | | | | | 117,1 g | |
| | Neononansäurevinylester | | | | 78,3 g | | | | | | 78,3 g |
| | Neodecansäurevinylester | | 84,3 g | | | | | | 84,3 g | | |
| | Neoundecansäurevinylester | | | | | | 90,3 g | | | | |
| Monomer B | 1-Vinylimidazol | | | | | 64,7 g | | 64,7 g | | | |
| | Styrol | 71,6 g | 41,6 g | | 41,6 g | | | | | | 41,6 g |
| | Benzylmethacrylat | | | | | | 70,4 g | | 70,4 g | | |
| | Phenethylmethacrylat | | | 130,8 g | | | | | | | |
| | 2-Phenoxyethylmethacrylat | | | | | | | | | 141,8 g | |
| Monomer A | Polyglykol 1 | | 300,0 g | | 300,0 g | | 300,0 g | | | | 300,0 g |
| | Polyglykol 2 | 378,4 g | | 378,4 g | | 378,4 g | | | | 378,4 g | |
| | Polyglykol 3 | | | | | | | 688 g | | | |
| | Polyglykol 4 | | | | | | | | 3000 g | | |
| Initiator | AMBN | 16,5 g | 13,4 g | | 13,4 g | 16,5 g | 13,4 g | 16,5 g | 13,4 g | | |
| | Dibenzoylperoxid | | | 20,8 g | | | | | | | |
| | Ascorbinsäure/t-BuOOH | | | | | | | | | 17,51g/ 7,73 g | 17,51g/ 7,73 g |
| Regler | Dodecanthiol | 16,5 g | | 16,5 g | | 16,5 g | | 16,5 g | | 16,5 g | 13,4 g |
| | Ethylmercaptan | | | | 4,2 g | | | | | | |
| Lösemittel | Methylethylketon | 660 g | 660 g | | | 660 g | | | 660 g | 660 g | 660 g |
| | Methylisobutylketon | | | 660 g | 660 g | | | | | | |
| | Isopropanol | | | | | | 660 g | 660 g | | | |
| | Polymerisation nach Synthesevorschrift | 1 | 1 | 1 | 1 | 1 | 1 | 1 | 1 | 2 | 2 |
| | $M_w$ des erhaltenen Polymers | 14000 | 18500 | 10300 | 9000 | 12800 | 17900 | 15400 | 26200 | 11000 | 8800 |
| | Derivatisierung des Polymers nach Synthesevorschrift | 3 | 3 | 4 | 4 | 3 | 4 | 3 | 3 | 4 | 4 |
| | Amidosulfonsäure | 32,7 g | 51,9 g | | | 32,7 g | | 49,1 g | 47,6 g | | |
| | Harnstoff | 1,03 g | 1,63 g | | | 1,03 g | | 1,55 g | 1,50 g | | |
| | Maleinsäureanhydrid | | | 33,7 g | 53,5 g | | 53,5 g | | | 33,7 g | 53,5 g |
| | NaOH | | | 1,10 g | 1,75 g | | 1,75 g | | | 1,10 g | 1,75 g |
| | Natriumsulfitösung (10 %ig in Wasser) | | | 433 g | 687 g | | 687 g | | | 433 g | 687 g |

| | Tabelle 2 | 11 | 12 | 13 | 14 | 15 | 16 | 17 | 18 | 19 | 20 |
|---|---|---|---|---|---|---|---|---|---|---|---|
| Monomer C | 2-Ethylhexylmethacrylat | 136,4 g | | | | | | | | | |
| | Laurylmethacrylat | | | 175,0 g | | | | | | | |
| | Stearylmethacrylat | | | | | 232,8 g | | | | | |
| | Isobornylmethacrylat | | | | | | | 152,9 g | | | |
| | Tetrahydrofurfurylmethacrylat | | | | | | | | | 117,1 g | |
| | Neononansäurevinylester | | | | 78,3 g | | | | | | 78,3 g |
| | Neodecansäurevinylester | | 84,3 g | | | | | | 84,3 g | | |
| | Neoundecansäurevinylester | | | | | | 90,3 g | | | | |
| Monomer B | 1-Vinylimidazol | | | | | 64,7 g | | 64,7 g | | | |
| | Styrol | 71,6 g | 41,6 g | | 41,6 g | | | | | | 41,6 g |
| | Benzylmethacrylat | | | | | | 70,4 g | | 70,4 g | | |
| | Phenethylmethacrylat | | | 130,8 g | | | | | | | |
| | 2-Phenoxyethylmethacrylat | | | | | | | | | 141,8 g | |
| Monomer A | Polyglykol 5 | | | | | | 210 g | | | | |
| | Polyglykol 6 | | 300,0 g | | 300,0 g | | | | 300,0 g | | 300 g |
| | Polyglykol 7 | 378,4 g | | 378,4 g | | 378,4 g | | 378,4 g | | 378,4 g | |
| Initiator | AMBN | 16,5 g | 13,4 g | | 13,4 g | 16,5 g | 13,4 g | | 13,4 g | | |
| | Dibenzoylperoxid | | | 20,8 g | | | | 20,8 g | | | |
| | Ascorbinsäure/tBuOOH | | | | | | | | | 17,51g/ 7,73 g | 17,51g/ 7,73 g |
| Regler | Dodecanthiol | | 13,4 g | 16,5 g | | | 13,4 g | 16,5 g | | | 13,4 g |
| | Ethylmercaptan | | | | 4,2 g | | | | 4,2 g | | |
| Lösemittel | Methylethylketon | 660 g | 660 g | | | 660 g | 660 g | | | 660 g | 660 g |
| | Methylisobutylketon | | | 660 g | 660 g | | | | | | |
| | Isopropanol | | | | | | | 660 g | 660 g | | |
| | Nach Synthesevorschrift | 1 | 1 | 1 | 1 | 1 | 1 | 1 | 1 | 2 | 2 |
| | $M_w$ des erhaltenen Polymers | 16200 | 7500 | 6100 | 8200 | 14600 | 7000 | 15000 | 8900 | 14700 | 9200 |
| | Derivatisierung des Polymers nach Synthesevorschrift | 4 | 4 | 4 | 3 | 3 | 4 | 4 | 3 | 3 | 3 |
| | Amidosulfonsäure | | | | 57,1 g | 36,0 g | | | 57,1 g | 36,0 g | 57,1 g |
| | Harnstoff | | | | 1,80 g | 1,14 g | | | 1,80 g | 1,14 g | 1,80 g |
| | Maleinsäureanhydrid | 37,1 g | 58,8 g | 37,1 g | | | 58,8 g | 37,1 g | | | |
| | NaOH | 1,21 g | 1,92 g | 1,21 g | | | 1,92 g | 1,21 g | | | |
| | Natriumsulfitlösung (10 %ig in Wasser) | 476 g | 756 g | 476 g | | | 756 g | 476 g | | | |

| | Tabelle 3 | 21 | 22 | 23 | 24 | 25 | 26 | 27 | 28 | 29 | 30 |
|---|---|---|---|---|---|---|---|---|---|---|---|
| Monomer C | 2-Ethylhexylmethacrylat | 136,4 g | | | | | | | | | |
| | Laurylmethacrylat | | | 175,0 g | | | | | | | |
| | Stearylmethacrylat | | | | | 232,8 g | | | | | |
| | Isobornylmethacrylat | | | | | | | 152,9 g | | | |
| | Tetrahydrofurfurylmethacrylat | | | | | | | | | 117,1 g | |
| | Neononansäurevinylester | | | | 78,3 g | | | | | | |
| | Neodecansäurevinylester | | 84,3 g | | | | | | 84,3 g | | 78,3 g |
| | Neoundecansäurevinylester | | | | | | 90,3 g | | | | |
| Monomer B | 1-Vinylimidazol | | | | | 64,7 g | | 64,7 g | | | |
| | Styrol | 71,6 g | 41,6 g | | 41,6 g | | | | | | 41,6 g |
| | Benzylmethacrylat | | | | | | 70,4 g | | 70,4 g | | |
| | Phenethylmethacrylat | | | 130,8 g | | | | | | | |
| | 2-Phenoxyethylmethacrylat | | | | | | | | | 141,8 g | |
| Monomer A | Polyglykol 8 | | 300,0 g | | | 300,0 g | | | 300,0 g | | |
| | Polyglykol 9 | 429 g | | | 429 g | | | | | 429 g | |
| | Polyglykol 10 | | | 876 g | | | | 876 g | | | |
| | Polyglykol 11 | | | | | | 1224 g | | | | 1224 g |
| Initiator | AMBN | 16,5 g | 13,4 g | | 13,4 g | 16,5 g | 13,4 g | | 13,4 g | | |
| | Dibenzoylperoxid | | | 20,8 g | | | | 20,8g | | | |
| | Ascorbinsäure/t-BuOOH | | | | | | | | | 17,51g/ 7,73 g | 17,51g/ 7,73 g |
| Regler | Dodecanthiol | 16,5 g | 13,4 g | | | 16,5 g | | | | 16,5 g | |
| | Ethylmercaptan | | | | 4,2 g | | | | 4,2 g | | |
| Lösemittel | Methylethylketon | 660 g | 660 g | | | 660 g | 660 g | | | | |
| | Methylisobutylketon | | | 660 g | 660 g | | | 660 g | 660 g | | |
| | Isopropanol | | | | | | | | | 660 g | 660 g |
| | Nach Synthesevorschrift | 1 | 1 | 1 | 1 | 1 | 1 | 1 | 1 | 2 | 2 |
| | $M_w$ des erhaltenen Polymers | 8400 | 7900 | 13900 | 9000 | 8100 | 26200 | 15000 | 8600 | 8900 | 24800 |
| | Derivatisierung des Polymers nach Synthesevorschrift | 3 | 4 | 4 | 3 | 3 | 4 | 3 | 3 | 4 | 4 |
| | Amidosulfonsäure | 54,4 g | | | 54,4 g | 57,1 g | | 55,6 g | 57,1 g | | |
| | Harnstoff | 1,72 g | | | 1,72 g | 1,80 g | | 1,76 g | 1,80 g | | |
| | Maleinsäureanhydrid | | 58,8 g | 57,3 g | | | 57,2 g | | | 56,1 g | 57,2 g |
| | NaOH | | 1,92 g | 1,87 g | | | 1,87 g | | | 1,83 g | 1,87 g |
| | Natriumsulfitlösung (10 %ig in Wasser) | | 756 g | 736 g | | | 734 g | | | 720 g | 734 g |

Monomer A aus Tabelle 1 bis 3:

Polyglykol 1 Polyalkylenglykolmonovinylether (Formel (I), k = 0, n = 0, m = 11,5; (A-O) entspricht ($CH_2CH_2O$)), Molmasse ca. 550 g/mol

| | |
|---|---|
| Polyglykol 2 | Polyalkylenglykolmonovinylether (Formel (I), k = 0, n = 0, m = 24; (A-O) entspricht ($CH_2CH_2O$)), Molmasse ca. 1100 g/mol |
| Polyglykol 3 | Polyalkylenglykolmonovinylether (Formel (I), k = 0, n = 0, m = 44,5; (A-O) entspricht ($CH_2CH_2O$)), Molmasse ca. 2000 g/mol |
| Polyglykol 4 | Polyalkylenglykolmonovinylether (Formel (I), k = 0, n = 0, m = 135,4; (A-O) entspricht ($CH_2CH_2O$)), Molmasse ca. 6000 g/mol |
| Polyglykol 5 | Polyalkylenglykolmonoallylether (Formel (I), k = 1, n = 0, m = 6,6; (A-O) entspricht ($CH_2CH_2O$)), Molmasse ca. 350 g/mol |
| Polyglykol 6 | Polyalkylenglykolmonoallylether (Formel (I), k = 1, n = 0, m = 10; (A-O) entspricht ($CH_2CH_2O$)), Molmasse ca. 500 g/mol |
| Polyglykol 7 | Polyalkylenglykolmonoallylether (Formel (I), k = 1, n = 0, m = 21,4; (A-O) entspricht ($CH_2CH_2O$)), Molmasse ca. 1000 g/mol |
| Polyglykol 8 | Polyalkylenglykolmonoallylether (Formel (I), k = 1, Verhältnis Ethylenoxid/Propylenoxid 6:4 (statistisch polymerisiert), Molmasse ca. 500 g/mol |
| Polyglykol 9 | Polyalkylenglykolmonoallylether (Formel (I), k = 1, Verhältnis Ethylenoxid (B-O)/Propylenoxid (A-O) 11:4 (Blockcopolymer), Molmasse ca. 750 g/mol |
| Polyglykol 10 | Polyalkylenglykolmonoallylether (Formel (I), k = 1, Verhältnis Ethylenoxid (B-O)/Propylenoxid (A-O) 20:10 (Blockcopolymer), Molmasse ca. 1500 g/mol |
| Polyglykol 11 | Polyalkylenglykolmonoallylether (Formel (I), k = 1, Verhältnis Ethylenoxid/Propylenoxid 20:20 (statistisch polymerisiert), Molmasse ca. 2100 g/mol |

Anwendungsbeispiel Pigmentpräparation

Herstellung einer Pigmentpräparation

Das Pigment wurde, entweder als Pulver, Granulat oder als Presskuchen, zusammen mit den Dispergiermitteln und anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

Beurteilung einer Pigmentpräparation

Die Bestimmung der Farbstärke und des Farbtons erfolgte nach DIN 55986. Für den "Rub-Out-Test" wurde die Dispersionsfarbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die Farbstärke und die Verträglichkeiten mit dem einzufärbenden Medium wurde mit einer Dispersionsfarbe für Außenanstriche ermittelt (Wasserbasis, 20 % $TiO_2$).

Die Viskosität wurde mit einem Kegel-Platte-Viskosimeter (Roto Visco 1) der Firma Haake bei 20 °C bestimmt (Titankegel: Ø 60 mm, 1°), wobei die Abhängigkeit der Viskosität von dem Schergefälle in einem Bereich zwischen 0 und 200 $s^{-1}$ untersucht wurde. Die Viskositäten wurden bei einem Schergefälle von 60 $s^{-1}$ gemessen.
Für eine Beurteilung der Lagerstabilität der Dispersionen wurde die Viskosität direkt nach der Herstellung der Präparation gemessen, sowie nach vierwöchiger Lagerung bei 50 °C.
Die in dem folgenden Beispiel beschriebene Pigmentpräparation wurde nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:

| | |
|---|---|
| 50 Teile | C.I. Pigment Blau 15 |
| 6 Teile | Polymer aus Synthesebeispiel 11 |
| 2 Teile | Benetzer |
| 8 Teile | Ethylenglykol |
| 0,2 Teile | Konservierungsmittel |
| 33,8 Teile | Wasser |

Die Pigmentpräparation hat in der Weißdispersion eine hohe Farbstärke und ist stabil. Der Rub-Out-Test zeigt keine Farbstärkeunterschiede im Vergleich zur nachgeriebenen Fläche. Die Dispersion erweist sich als gut fließfähig und lagerstabil, da sie nach 28 Tagen Lagerung bei 50 °C ebenfalls noch gut fließfähig ist. Die Viskosität nach der Herstellung beträgt 681 mPa·s.

**Patentansprüche**

1. Anionisch modifizierte Copolymere, erhältlich durch Polymerisation der Monomere (A), (B) und (C) unter Erhalt von nichtionischen Copolymeren, die reaktive terminale OH-Gruppen besitzen, und anschließende Umsetzung der terminalen OH-Gruppen im Monomer der Formel (I) zu anionischen Endgruppen, wobei die anionischen Endgruppen einen der Reste $SO_3M$, $CH_2COOM$, $PO_3M_2$ oder Sulfosuccinat bedeuten, wobei M die Bedeutung H, einwertiges Metallkation, zweiwertiges Metallkation, $NH_4^+$, ein sekundäres, tertiäres oder quartäres Ammoniumion, oder eine Kombination davon, hat,

(A) ein Monomer der Formel (I) ist

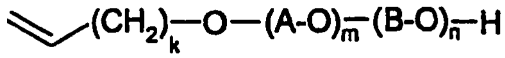

(I)

wobei

A für $C_2$- bis $C_4$-Alkylen und
B für ein von A unterschiedliches $C_2$- bis $C_4$-Alkylen steht,
k der Zahl 0 oder 1 entspricht,
m eine Zahl von 0 bis 500 ist;
n eine Zahl von 0 bis 500 ist,

wobei die Summe m + n gleich 1 bis 1000 ist;
(B) ein ethylenisch ungesättigtes Monomer ist, das eine aromatische Gruppe enthält; und **dadurch gekennzeichnet ist, dass** das Monomer (B) eine Verbindung der Formel (IIa) oder (IIb) ist

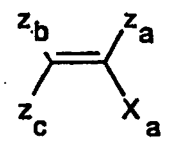

(IIa)

wobei

$X_a$ für einen aromatischen oder araliphatischen Rest mit 3 bis 30 C-Atomen steht, der gegebenenfalls eines oder mehrere der Heteroatome N, O und. S enthält,
$Z_a$ für H oder $(C_1$-$C_4)$-Alkyl steht,
$Z_b$ für H oder $(C_1$-$C_4)$-Alkyl steht,
$Z_c$ für H oder $(C_1$-$C_4)$-Alkyl steht;

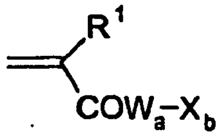

(IIb)

wobei

$R^1$ für Wasserstoff oder Methyl steht,
$X_b$ für einen aromatischen oder araliphatischen Rest mit 3 bis 30 C-Atomen steht, der gegebenenfalls eines

oder mehrere der Heteroatome N, O und S enthält,
$W_a$ für Sauerstoff oder die Gruppe NH steht.

(C) ein ethylenisch ungesättigtes Monomer ist, das einen Alkylrest enthält, und **dadurch gekennzeichnet ist, dass** das Monomer (C) eine Verbindung der Formel (IIIa) oder Formel (IIIb) ist:
wobei

$R^2$ für Wasserstoff oder Methyl steht,
Y für einen aliphatischen Kohlenwasserstoffrest mit 1 bis 30 C-Atomen steht, der linear oder verzweigt, oder auch cyclisch sein kann, und Heteroatome O, N und/oder S enthalten kann und auch ungesättigt sein kann,
$W_b$ für Sauerstoff oder die Gruppe NH steht;

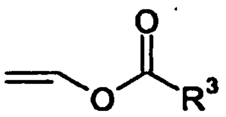

(IIIb)

wobei

$R^3$ für einen aliphatischen Kohlenwasserstoffrest mit 1 bis 30 C-Atomen steht, der linear oder verzweigt, oder auch cyclisch sein kann, und Heteroatome O, N und/oder S enthalten kann und auch ungesättigt sein kann.

2. Copolymer nach Anspruch 1, **dadurch gekennzeichnet, dass** der molare Anteil der Monomere 1 bis 80 % für das Monomer (A), 0,1 bis 80 % für das Monomer (B), und 0,1 bis 80 % für das Monomer (C) beträgt.

3. Copolymer nach Anspruch 1 oder 2, **dadurch gekennzeichnet, dass** A Ethylen und B Propylen, oder A Propylen und B Ethylen bedeuten.

4. Copolymer nach einem oder mehreren der Ansprüche 1 bis 3, **gekennzeichnet durch** die Formeln (IV), (V), (VI) oder (VII)

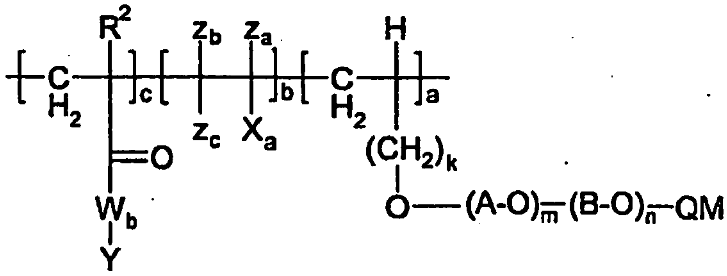

(IV)

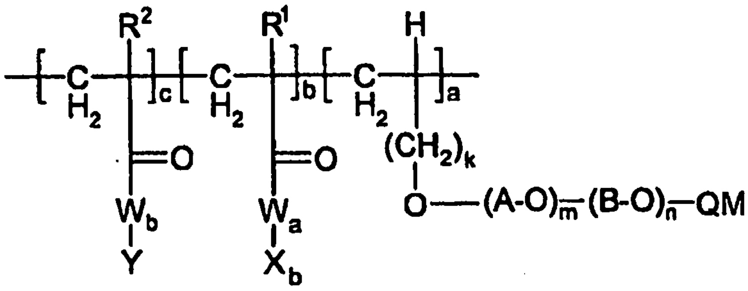

(V)

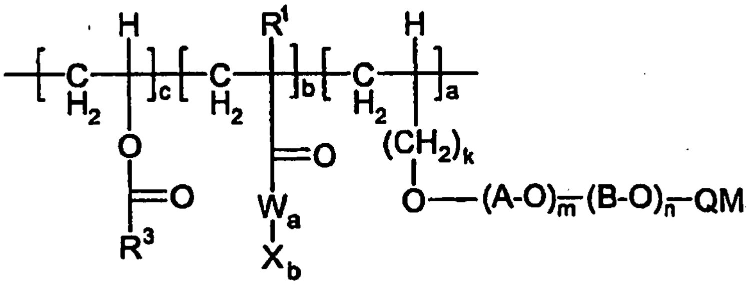

(VI)

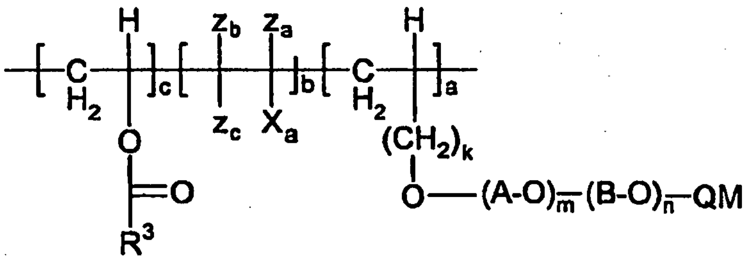

(VII)

wobei

A für $C_2$-$C_4$-Alkylen;
B für ein von A unterschiedliches $C_2$-$C_4$-Alkylen;
m für eine Zahl von 0 bis 500;
n für eine Zahl von 0 bis 500;

wobei die Summe m + n gleich 1 bis 1000 ist;

$X_a$ für einen aromatischen oder araliphatischen Rest mit 3 bis 30 C-Atomen steht, der gegebenenfalls eines oder mehrere der Heteroatome N, O und S enthält,
$Z_a$ für H oder ($C_1$-$C_4$)-Alkyl steht,
$Z_b$ für H oder ($C_1$-$C_4$)-Alkyl steht,
$Z_c$ für H oder ($C_1$-$C_4$)-Alkyl steht;

$R^2$ für Wasserstoff oder Methyl steht,
Y für einen aliphatischen Kohlenwasserstoffrest mit 1 bis 30 C-Atomen steht, der linear oder verzweigt, oder auch cyclisch sein kann, und die Heteroatome O, N und /oder S enthalten kann, oder ungesättigt ist,
$W_b$ für Sauerstoff oder die Gruppe NH steht,
$R^1$ für Wasserstoff oder Methyl steht,
$X_b$ für einen aromatischen oder araliphatischen Rest mit 3 bis 30 C-Atomen steht, der gegebenenfalls eines oder mehrere der Heteroatome N, O und S enthält,
$W_a$ für Sauerstoff oder die Gruppe NH steht,
$R^3$ für einen aliphatischen Kohlenwasserstoffrest mit 1 bis 30 C-Atomen steht, der linear oder verzweigt, oder auch cyclisch sein kann, und Heteroatome O, N und/oder S enthalten kann und auch ungesättigt sein kann;

a = 0.01 bis 0,8; b = 0,001 bis 0,8; c = 0,001 bis 0,8; wobei die Summe aus a + b + c gleich 1 ist,

Q die Bedeutung $SO_3$, $CH_2COO$, $PO_3M$ oder Sulfosuccinat hat, wobei M die Bedeutung H, einwertiges Metallkation, zweiwertiges Metallkation, $NH_4^+$, ein sekundäres, tertiäres oder quartäres Ammoniumion, oder eine Kombination davon,hat.

5. Verfahren zur Herstellung eines Copolymers nach einem oder mehreren der Ansprüche 1 bis 4, wobei die Monomere (A), (B) und (C) radikalisch polymerisiert und die dabei entstehenden terminalen OH-Gruppen im Monomer der Formel (I) zu anionischen Endgruppen umgesetzt werden.

6. Verwendung eines Copolymers nach einem oder mehreren der Ansprüche 1 bis 4 als Dispergiermittel, insbesondere für Pigmente und Füllstoffe.

## Claims

1. An anionic modified copolymer obtainable by polymerization of the monomers (A), (B) and (C) to obtain a nonionic copolymer having reactive terminal OH groups and subsequent conversion of the terminal OH groups in the monomer of formula (I) to anionic end groups, wherein the anionic end groups represent one of the radicals $SO_3M$, $CH_2COOM$, $PO_3M_2$ or sulfosuccinate, where M represents H, a monovalent metal cation, a divalent metal cation, $NH_4^+$, a secondary, tertiary or quaternary ammonium ion or a combination thereof,

(A) is a monomer of formula (I)

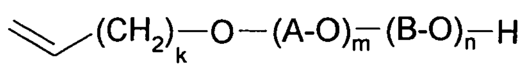

(I)

where

A represents $C_2$- to $C_4$-alkylene,
B represents a $C_2$- to $C_4$-alkylene other than A,
k equals 0 or 1,
m is from 0 to 500,
n is from 0 to 500,

provided the sum total of m + n is from 1 to 1000;
(B) is an ethylenically unsaturated monomer which contains an aromatic group; and wherein the monomer (B) is a compound of formula (IIa) or (IIb):

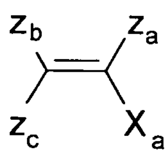

(IIa)

where

$X_a$ represents an aromatic or araliphatic radical having 3 to 30 carbon atoms, which optionally contains one or more of the heteroatoms N, O and S,
$Z_a$ represents H or ($C_1$-$C_4$)-alkyl,
$Z_b$ represents H or ($C_1$-$C_4$)-alkyl,
$Z_c$ represents H or ($C_1$-$C_4$)-alkyl;

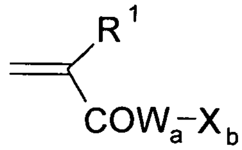

(IIb)

where

$R^1$ represents hydrogen or methyl,
$X_b$ represents an aromatic or araliphatic radical having 3 to 30 carbon atoms, which optionally contains one or more of the heteroatoms N, O and S,
$W_a$ represents oxygen or the group NH;

(C) is an ethylenically unsaturated monomer which contains an alkyl radical, wherein the monomer (C) is a compound of formula (IIIa) or formula (IIIb):

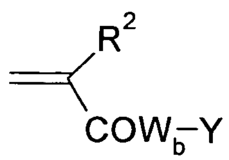

(IIIa)

where

$R^2$ represents hydrogen or methyl,
Y represents an aliphatic hydrocarbyl radical having 1 to 30 carbon atoms, which may be linear or branched or else cyclic, and may contain the heteroatoms O, N and/or S and also be unsaturated,
$W_b$ represents oxygen or the group NH;

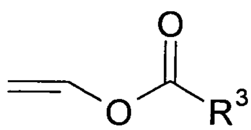

(IIIb)

where

$R^3$ represents an aliphatic hydrocarbyl radical having 1 to 30 carbon atoms,

which may be linear or branched or else cyclic, and may contain the heteroatoms O, N and/or S and also be unsaturated.

**2.** The copolymer as claimed in claim 1, wherein the molar fraction of the monomers is 1 to 80% for monomer (A), 0.1 to 80% for monomer (B), and 0.1 to 80% for monomer (C).

**3.** The copolymer as claimed in claim 1 or 2, wherein A represents ethylene and B represents propylene or A represents propylene and B represents ethylene.

**4.** The copolymer as claimed in one or more of claims 1 to 3, **characterized by** the formulae (IV), (V), (VI) or (VII)

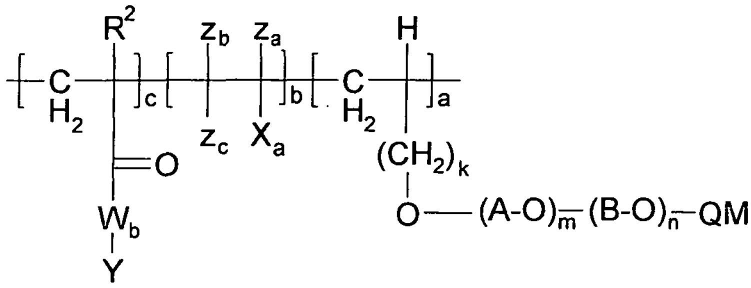

(IV)

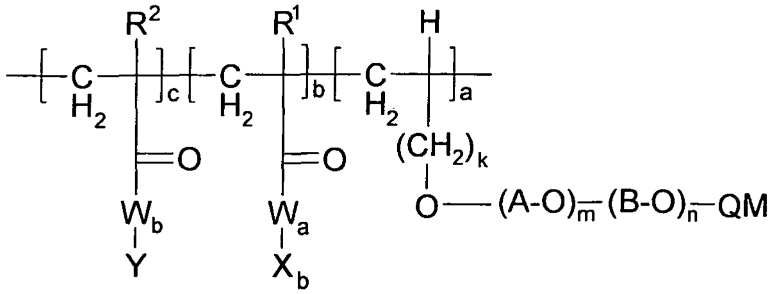

(V)

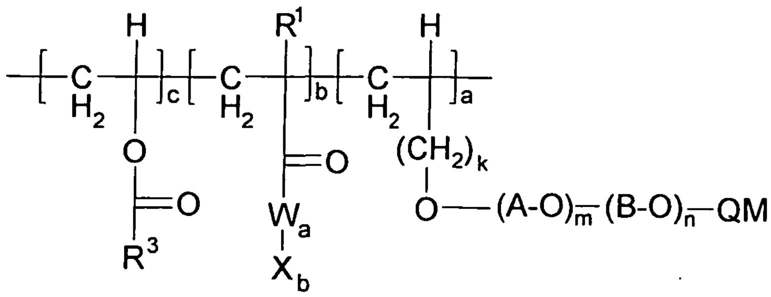

(VI)

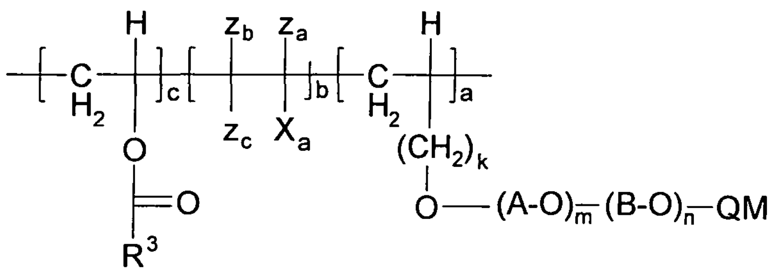

(VII)

where

A represents $C_2$-$C_4$-alkylene,
B represents a $C_2$-$C_4$-alkylene other than A,
m is from 0 to 500,
n is from 0 to 500,

provided the sum total of m + n is from 1 to 1000,

$X_a$ represents an aromatic or araliphatic radical having 3 to 30 carbon atoms which optionally contains one or more of the heteroatoms N, O and S,
$Z_a$ represents H or ($C_1$-$C_4$)-alkyl,
$Z_b$ represents H or ($C_1$-$C_4$)-alkyl,
$Z_c$ represents H or ($C_1$-$C_4$)-alkyl,
$R^2$ represents hydrogen or methyl,
Y represents an aliphatic hydrocarbyl radical having 1 to 30 carbon atoms, which may be linear or branched or else cyclic, and which may contain the heteroatoms O, N and/or S, or is unsaturated,
$W_b$ represents oxygen or the NH group,
$R^1$ represents hydrogen or methyl,
$X_b$ represents an aromatic or araliphatic radical having 3 to 30 carbon atoms, which optionally contains one or more of the heteroatoms N, O and S,
$W_a$ represents oxygen or the NH group,
$R^3$ represents an aliphatic hydrocarbyl radical having 1 to 30 carbon atoms, which may be linear or branched or else cyclic, and which may contain heteroatoms O, N and/or S and may also be unsaturated

a = 0.01 to 0.8; b = 0.001 to 0.8; c = 0.001 to 0.8 provided the sum total of a + b + c equals 1,

Q represents $SO_3$, $CH_2COO$, $PO_3M$ or sulfosuccinate, where M represents H, a monovalent metal cation, a divalent metal cation, $NH_4^+$, a secondary, tertiary or quaternary ammonium ion, or a combination thereof.

**5.** A process for preparing a copolymer as claimed in one or more of claims 1 to 4, which process comprises free-radically polymerizing the monomers (A), (B) and (C) and converting the resulting terminal OH groups in the monomer of formula (I) to anionic end groups.

**6.** The use of a copolymer as claimed in one or more of claims 1 to 4 as a dispersant, particularly for pigments and fillers.

## Revendications

**1.** Copolymères modifiés anioniquement, pouvant être obtenus par polymérisation des monomères (A), (B) et (C) pour obtenir des copolymères non ioniques comprenant des groupes OH terminaux réactifs, puis transformation des groupes OH terminaux dans le monomère de formule (I) en groupes terminaux anioniques, les groupes terminaux anioniques signifiant un des radicaux $SO_3M$, $CH_2COOM$, $PO_3M_2$ ou sulfosuccinate, M ayant la signification H, cation métallique monovalent, cation métallique bivalent, $NH_4^+$, un ion ammonium secondaire, tertiaire ou quaternaire ou une combinaison de ceux-ci,

(A) étant un monomère de formule (I)

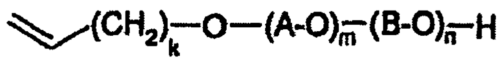

(I)

dans laquelle

A représente un alkylène en $C_2$ à $C_4$ et
B représente un alkylène en $C_2$ à $C_4$ différent de A,
k correspond au nombre 0 ou 1,
m est un nombre de 0 à 500,
n est un nombre de 0 à 500,

la somme m + n étant de 1 à 1 000 ;
(B) étant un monomère éthyléniquement insaturé qui contient un groupe aromatique et qui est **caractérisé en ce que** le monomère (B) est un composé de formule (IIa)
ou (IIb)

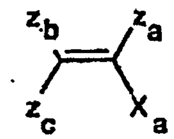

(IIa)

dans laquelle

$X_a$ représente un radical aromatique ou araliphatique de 3 à 30 atomes C, qui contient éventuellement un ou plusieurs des hétéroatomes N, O et S,
$Z_a$ représente H ou alkyle en ($C_1$-$C_4$),
$Z_b$ représente H ou alkyle en ($C_1$-$C_4$),
$Z_c$ représente H ou alkyle en ($C_1$-$C_4$) ;

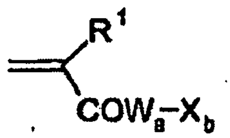

(IIb)

dans laquelle

$R^1$ représente hydrogène ou méthyle,
$X_b$ représente un radical aromatique ou araliphatique de 3 à 30 atomes C qui contient éventuellement un ou plusieurs des hétéroatomes N, O et S,
$W_a$ représente l'oxygène ou le groupe NH,

(C) étant un monomère éthyléniquement insaturé, qui contient un radical alkyle et qui est **caractérisé en ce que** le monomère (C) est un composé de formule (IIIa) ou de formule (IIIb) :

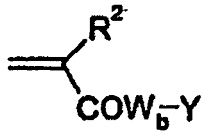

(IIIa)

dans laquelle

$R^2$ représente hydrogène ou méthyle,
Y représente un radical hydrocarboné aliphatique de 1 à 30 atomes C qui peut être linéaire ou ramifié, ou également cyclique, et qui peut contenir les hétéroatomes O, N et/ou S, et qui peut également être insaturé,
$W_b$ représente l'oxygène ou le groupe NH ;

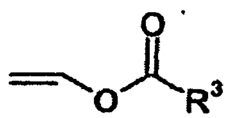

(IIIb)

dans laquelle
$R^3$ représente un radical hydrocarboné aliphatique de 1 à 30 atomes C qui peut être linéaire ou ramifié, ou également cyclique, et qui peut contenir les hétéroatomes O, N et/ou S, et qui peut également être insaturé.

2. Copolymère selon la revendication 1, **caractérisé en ce que** la proportion molaire des monomères est de 1 à 80 % pour le monomère (A), 0,1 à 80 % pour le monomère (B) et 0,1 à 80 % pour le monomère (C).

3. Copolymère selon la revendication 1 ou 2, **caractérisé en ce que** A signifie éthylène et B propylène, ou A propylène et B éthylène.

4. Copolymère selon une ou plusieurs des revendications 1 à 3, **caractérisé par** les formules (IV), (V), (VI) ou (VII)

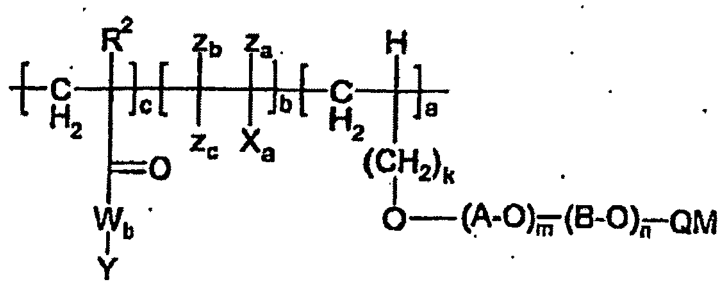

(IV)

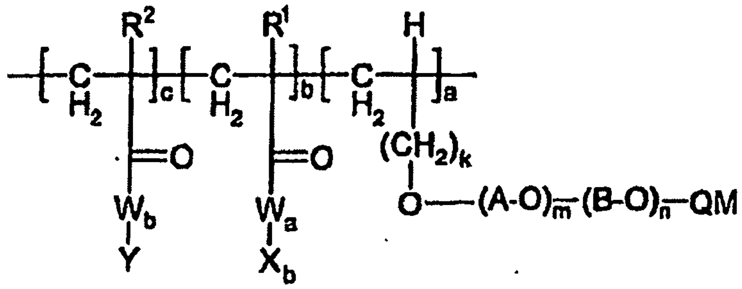

(V)

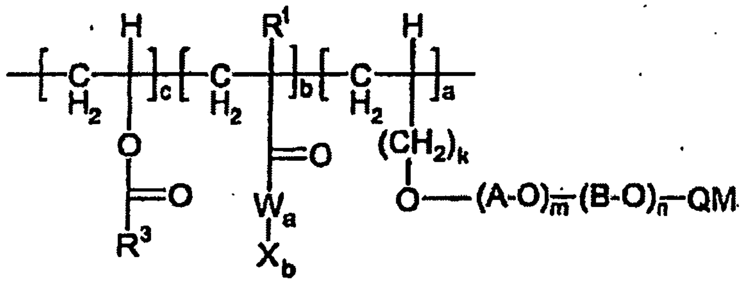

(VI)

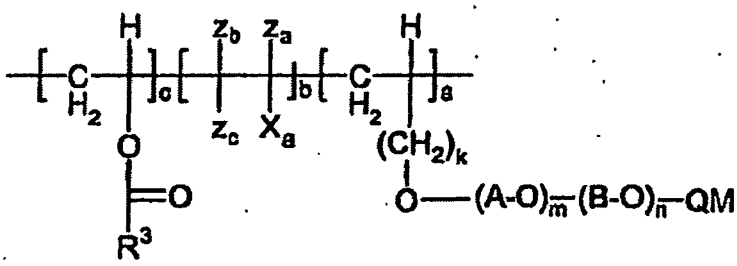

(VII)

dans lesquelles

A représente un alkylène en $C_2$-$C_4$,
B représente un alkylène en $C_2$-$C_4$ différent de A,
m représente un nombre de 0 à 500,
n représente un nombre de 0 à 500,

la somme m + n étant de 1 à 1 000,

$X_a$ représente un radical aromatique ou araliphatique de 3 à 30 atomes C, qui contient éventuellement un ou plusieurs des hétéroatomes N, O et S,
$Z_a$ représente H ou alkyle en ($C_1$-$C_4$),
$Z_b$ représente H ou alkyle en ($C_1$-$C_4$),
$Z_c$ représente H ou alkyle en ($C_1$-$C_4$),
$R^2$ représente hydrogène ou méthyle,
Y représente un radical hydrocarboné aliphatique de 1 à 30 atomes C qui peut être linéaire ou ramifié, ou également cyclique, et qui peut contenir les hétéroatomes O, N et/ou S, ou qui est insaturé,
$W_b$ représente l'oxygène ou le groupe NH,
$R^1$ représente hydrogène ou méthyle,
$X_b$ représente un radical aromatique ou araliphatique de 3 à 30 atomes C qui contient éventuellement un ou plusieurs des hétéroatomes N, O et S,
$W_a$ représente l'oxygène ou le groupe NH,
$R^3$ représente un radical hydrocarboné aliphatique de 1 à 30 atomes C qui peut être linéaire ou ramifié, ou également cyclique, et qui peut contenir les hétéroatomes O, N et/ou S, et qui peut également être insaturé,

a = 0,01 à 0, 8 ; b = 0,001 à 0,8 ; c = 0,001 à 0, 8 ; la somme de a + b + c valant 1,

Q a la signification $SO_3$, $CH_2COO$, $PO_3M$ ou sulfosuccinate, M ayant la signification H, cation métallique monovalent, cation métallique bivalent, $NH_4^+$, un ion ammonium secondaire, tertiaire ou quaternaire, ou une combinaison de ceux-ci.

5. Procédé de fabrication d'un copolymère selon une ou plusieurs des revendications 1 à 4, selon lequel les monomères (A), (B) et (C) sont polymérisés par voie radicalaire et les groupes OH terminaux ainsi formés dans le monomère de formule (I) sont transformés en groupes terminaux anioniques.

6. Utilisation d'un copolymère selon une ou plusieurs des revendications 1 à 4 en tant que dispersant, notamment pour pigments et charges.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2005085563 A
- EP 0894811 A
- EP 0736553 A
- DE 10017667 A
- US 2003209695 A1
- JP 57194038 A
- DE 2638946